Europäisches Patentamt

European Patent Office

Office européen des brevets

(11) Veröffentlichungsnummer: **0 490 091 A2**

# (12) EUROPÄISCHE PATENTANMELDUNG

(21) Anmeldenummer: **91119163.3**

(22) Anmeldetag: **11.11.91**

(51) Int. Cl.⁵: **B23K 37/02**

(30) Priorität: **07.12.90 DE 4039113**

(43) Veröffentlichungstag der Anmeldung:
**17.06.92 Patentblatt 92/25**

(84) Benannte Vertragsstaaten:
**AT BE CH DE DK ES FR GB GR IT LI LU NL SE**

(71) Anmelder: **Lipp, Xaver**
**Hohenstaufer Strasse 30**
**W-7090 Ellwangen(DE)**

(72) Erfinder: **Lipp, Xaver**
**Hohenstaufer Strasse 30**
**W-7090 Ellwangen(DE)**

(74) Vertreter: **Riebling, Peter, Dr.-Ing.,**
**Patentanwalt**
**Rennerle 10, Postfach 31 60**
**W-8990 Lindau/B.(DE)**

(54) Verfahren zur Herstellung einer zusammengesetzten Blechtafel und Schweisswagen zur Durchführung des Verfahrens.

㊼ Beschrieben wird ein Verfahren zur Herstellung einer zusammengesetzten Blechtafel durch Bildung einer Bördelnaht mit hochstehenden Bördelrändern zwischen nebeneinander gelegten Blechbahnen, die anschließend mit Hilfe eines angetriebenen Schweißwagens miteinander verschweißt werden, wobei erfindungsgemäß die hochstehenden Bördelränder kurz vor dem Verschweißen gekürzt werden.

Ein hierzu vorgesehener Schweißwagen hat an seiner Unterseite in Fahrtrichtung vor einer Schweißeinrichtung eine Trenneinrichtung, die vorzugsweise als angetriebenes Schneidrollenpaar ausgebildet ist. Dadurch können insbesondere Dünnbleche in einwandfreier Qualität zu einer Blechtafel zusammengesetzt werden.

FIG 1

EP 0 490 091 A2

Die Erfindung betrifft ein Verfahren zur Herstellung einer zusammengesetzten Blechtafel durch Bildung einer Bördelnaht mit hochstehenden Bördelrändern zwischen nebeneinander gelegten Blechbahnen, die anschließend mit Hilfe eines angetriebenen Schweißwagens, der von den Börderrändern geführt wird, miteinander verschweißt werden. Außerdem bezieht sich die Erfindung auf einen Schweißwagen zur Durchführung dieses Verfahrens mit einer an seiner Unterseite angebrachten Schweißeinrichtung und mit Führungsrollen für den Schweißwagen an den Bördelrändern.

Ein derartiges Verfahren und ein solcher Schweißwagen sind beschrieben in der deutschen Patentschrift 37 39 359. Dort werden nebeneinander gelegte Blechbahnen dadurch zu einer größeren Blechtafel miteinander verschweißt, und daß die hochstehenden Bördelränder der Blechbahnen sich berührend ineinander gelegt werden, worauf dann der Schweißwagen längs der Bördelränder verfährt und diese miteinander verschweißt, wodurch die zusammengesetzte Blechtafel hergestellt wird. Im allgemeinen wird das Material der hochstehenden Bördelränder hierbei für den Schweißvorgang verwendet, so daß die Bördelränder vollständig verschwinden und nur eine Schweißnaht sichtbar bleibt.

Dieses bekannte Schweißverfahren und der bekannte Schweißwagen werden mit großem Erfolg für unterschiedliche Blechstärken eingesetzt.

Beim Schweissen von Dünnblechen besteht jedoch das Problem, daß man für die Führung des Schweißwagens, der sich entlang der Bördelungsnähte abwälzt, eine Höhe der Bördelkanten von z.B. 15 - 20 mm benötigt, während man für das Verschweissen der Bördelkanten lediglich eine Höhe von etwa 4 - 6mm nur benötigt.

Eine relativ große Bördelungshöhe ist auch deshalb erforderlich, um die Bleche durch die Führungsvorrichtung im Schweißwagen genügend genau zusammen zu pressen, um sie in diesem fixierten Zustand dem Schweißvorgang zuführen zu können.

Ein weiterer Nachteil der bekannten Schweißvorrichtung nach der DE 37 39 359 Cl ist, daß dort die Führungsrollen der Schweißvorrichtung getrennt von den Antriebsrollen angeordnet waren, wodurch sich ein höherer Maschinenaufwand ergab. Bei der genannten Schweißvorrichtung waren sogar zwei voneinander beabstandete, getrennt voneinander angetriebene Führungsrollen vorhanden.

Es handelt sich also um einander widersprechende Forderungen, daß nämlich einerseits für den Schweißvorgang eine relativ niedrige Bördelhöhe gefordert wird und andererseits für das Führen der Bleche zueinander und für die Steuerung der Schweißvorrichtung über die Bördelkante eine relativ hohe Bördelhöhe gefordert wird.

Der vorliegenden Erfindung liegt deshalb die Aufgabe zugrunde, ein Verfahren zum Herstellen von zusammengesetzten Blechtafeln der eingangs genannten Art so weiterzubilden, daß die Blechtafeln optimal zusammengeschweisst werden können und daß der hierbei geforderten niedrigen Höhe der Bördelkanten die Schweißvorrichtung in optimaler Weise die relativ niedrigen Bördelkanten zusammenhält und entlang dieser Bördelkanten geführt werden kann.

Zur Lösung der gestellten Aufgabe wird entsprechend dem Kennzeichen von Anspruch 1 vorgeschlagen, daß die Schweißvorrichtung mit einer Trenneinrichtung verbunden ist, welche die hochstehenden Bördelkanten oder Ränder kurz vor Beginn des Schweißvorgangs auf die für die Schweißung erforderliche Höhe abtrennt.

Eine Vorrichtung zur Ausübung des vorgenannten Verfahrens besteht entsprechend Anspruch 3 darin, daß in Vorschubrichtung vor der Schweißeinrichtung des Schweißwagens eine Trenneinrichtung fest am Wagen angeordnet ist und den erforderlichen Trennvorgang an den hochstehenden Bördelkanten ausführt.

Die für das Schweissen erforderliche Höhe, die von der Trenneinrichtung hergestellt werden soll, richtet sich nach einer Vielzahl von Parametern. Die Höhe wird bestimmt durch die erforderliche Materialmasse der nach dem Abtrennen vorhandenen, hochstehenden Bördelkanten, um zu gewährleisten, daß diese Bördelkanten dann flächig zu einer Blechtafel im Sinne der DE 37 39 359 Cl verschweisst werden.

Auf die dortige Offenbarung wird bezug genommen; diese Offenbarung wird vollinhaltlich von der vorliegenden Erfindung umfasst.

Für die Ausbildung der Trenneinrichtung gibt es eine Vielzahl von Möglichkeiten, die sämtliche vom vorliegenden Erfindungsgedanken umfasst sind.

In einer ersten wichtigen Ausführungsform ist vorgesehen, daß die Trennvorrichtung als mitlaufendes Schneidmesser ausgebildet ist, wobei einander gegenüberliegend zwei Schneidmesser vorhanden sind, die mit ihren Schneidkanten in der erforderlichen Höhe die Bördelkanten abschneiden. Wichtig hierbei ist, daß die Schneidmesser gleichzeitig als Anpress- und Transportrollen ausgebildet sind und daß hier mit nur lediglich zwei einander gegenüberliegende Schneidmesser angeordnet sind, die gleichzeitig eine Anpressfunktion an den noch hochstehenden Bördelrand haben, so daß durch diese Doppelfunktion der Schneidmesser gleichzeitig die hochstehenden Bördelkanten zusammengeführt und zusammengepresst werden und danach in diesem Zustand abgeschnitten werden.

2

Die Drehgeschwindigkeit der Schneidmesser ist hierbei stufenlos einstellbar und bestimmt somit den Vorschub der gesamten Schweißvorrichtung entlang der Bördelnaht und somit auch die Schweißgeschwindigkeit.

Wichtig hierbei ist, daß die Schneidmesser noch zusätzlich in senkrechter Ebene zur Seitenfläche der Bördelkanten an diese andrückbar sind, um eine genügend große reibschlüssige Anlage der Anpress- und Transportrollen an die Bördelkanten zu gewährleisten und um gleichzeitig den Schneidvorgang optimal durchzuführen.

In einer anderen Ausführungsform ist es vorgesehen, daß getrennt von den Schneidmessern Anpress- und Transportrollen einander gegenüberliegend vorgesehen sind.

Hierbei können zwei einander gegenüberliegende Schneidmesser verwendet werden, wobei die Anpress- und Transportrollen vor und/oder hinter den Schneidmessern angeordnet sind.

Wie eingangs bereits schon erwähnt wurde, werden sämtliche bekannten Trennverfahren als erfindungswesentlich von der vorliegenden Erfindung beansprucht.

In einer weiteren Ausführungsform wird deshalb auch eine Rollenschere als erfindungswesentlich beansprucht, so daß anstatt der hier beschriebenen rotierend angetriebenen Schneidmesser eine Rollenschere vorhanden ist, welche die beiden hochstehenden Bördelkanten abschert.

Als dritte Möglichkeit, die vom Schutz der vorliegenden Erfindung umfasst sein soll, ist eine Laser-Schneideinrichtung vorhanden, welche mit einem Laserstrahl die hochstehenden Bördelkanten abschneidet.

Als weitere Möglichkeit werden schnell-laufende Schneidmesser beansprucht, die demzufolge in ihrer Umdrehungsgeschwindigkeit wesentlich schneller laufen, als die Transportgeschwindigkeit der Schweißvorrichtung längs der Schweißnaht ist.

Ebenso kommt ein Abwägen der hochstehenden Bördelkanten mit einer Trennsäge in Betracht. Die Trennsäge kann hierbei oszillierend angetrieben sein oder auch drehend.

In einer weiteren Ausführungsform der vorliegenden Erfindung ist vorgesehen, daß während der Herstellung der Bördelkanten gleichzeitig querschnittsschwächende Sicken oder Nuten in Längsrichtung der Bördelkanten gesehen, in diese eingearbeitet werden. Entlang dieser Sicken oder querschnittsschwächenden Nuten erfolgt dann ein sehr einfaches Trennen oder Schneiden der hochstehenden Bördelkanten.

Unter dem Begriff "Trennen" wird demzufolge auch ein Abreissen der hochstehenden Bördelkanten im Bereich der querschnittsschwächenden Nuten oder Sicken verstanden.

Ebenso ist es möglich, statt querschnittsschwächender Nuten entsprechende Sicken oder Perforationen an den entsprechenden Trennstellen anzubringen.

Der Rahmen der vorliegenden Erfindung erstreckt sich nicht nur auf das nach dem Patent 37 39 359 beschriebenen Elektrodenschweissen, sondern nach der vorliegenden Erfindung sollen sämtliche Schweissverfahren beansprucht werden, die zum Stand der Technik gehören. Derartige Schweissverfahren sind z.B. das in der deutschen Patentschrift 37 39 359 beschriebene Elektrodenschweissen; es kommen aber ebenso auch ein Autogenschweissen, ein Thermitschweissen (Pulverschweissen) in Betracht, ebenso wie ein Laserschweißen und im übrigen alle bekannten Schweißverfahren, die oben stehend noch nicht erwähnt wurden.

Wichtig hierbei ist, daß entsprechend dem angewendeten Schweißverfahren die Höhe der abzutrennenden Bördelkante unterschiedlich einstellbar ist Hierbei ist also vorgesehen, daß die Trenneinrichtung höhenverstellbar an der Schweißeinrichtung angeordnet ist, wobei somit entsprechend der geforderten Schweißnaht stufenlos die Höhe des noch verbleibenden Bördelrandes einstellbar ist. Die Höhe des verbleibenden Bördelrandes richtet sich - wie vorher dargestellt - nach der Masse der verbleibenden Bördelkanten, die so gewählt werden muß, daß eine flächige Verschmelzung in der Schweißnaht zur Herstellung einer durchgehenden Blechbahn erreicht wird.

Anstatt der Höheneinstellbarkeit der Trenneinrichtung kann es auch vorgesehen sein, daß die Schneidmesser entsprechend auswechselbar ausgebildet sind und gegen Schneidmesser ausgewechselt werden können, die einen anderen Trennschnitt in einer anderen Höhe anbringen.

Wichtig ist im übrigen, daß bei der Verwendung von mitlaufenden, gleichzeitig transportierenden, Schneidmessern ein Schnitt und gleichzeitig ein Reibschluß an den hochstehenden Bördelkanten angebracht werden muß, um zu gewährleisten, daß geschnitten und gleichzeitig transportiert wird. Hierzu weisen die Schneidmesser entsprechende Andrückkanten oder Andrückflächen auf, mit denen sie sich an die Innenseite der hochstehenden Bördelkanten anlegen und so durch Reibschluß einen Transport der Schneidvorrichtung entlang der hochstehenden Bördelkanten gewährleisten.

Wichtig hierbei ist, daß die Schneidmesser im Winkel zur Horizontalen bzw. zur Vertikalen angeordnet sind und mit ihren unteren abgerundeten Radien bis in den unteren Bördelungsknick hineinragen, um dort eine Abstützung der gesamten Bördelkante und Zusammenpressung der gesamten Bördelkante zu gewährleisten. Auf diese Weise wird gewährleistet, daß die abgeschnittenen Bördelkanten noch stark zusammengepresst werden und in diesem zusammengepressten Zustand unmittelbar danach der Schweissung zugeführt werden. Hierbei ist es wichtig, daß diese Andrückfunktion möglichst dicht vor der Schweißzone liegt, um eine optimale Schweissung zu gewährleisten.

Die Neigung der beiden Schneidmesser zur Vertikalen hat den Zweck, daß die untere, im Bördelknick liegenden abgerundeten Radien keine Spuren beim Transport entlang der Bördelkanten auf der horizontalen Fläche der Bleche hinterlassen.

Im folgenden wird nun die Erfindung anhand mehrerer Ausführungsformen näher beschrieben.

Figur 1 zeigt schematisiert in Draufsicht eine Schweißvorrichtung nach der Erfindung,

Figur 2 zeigt schematisiert in Vorderansicht die Profilierung einer Führungsrolle,

Figur 3 zeigt den vergrößerten Schnitt durch die Schneidrollen,

Figur 4 zeigt eine gegenüber Figur 1 abgewandelte Ausführungsform,

Figur 5 zeigt eine Möglichkeit zur Anbringung von querschnittsschwächenden Nuten an den Bördelkanten;

Figur 6 zeigt einen Schnitt unter Bildung eines vertikalen Ansatzes.

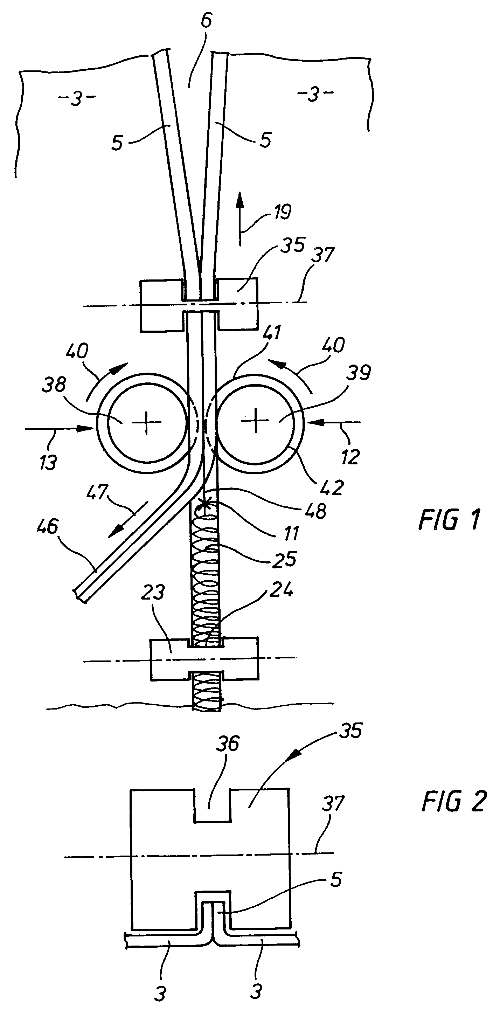

Gemäß Figur 1 ist dargestellt, daß zwei Blechtafeln 3 mit Bördeln 5 versehen sind und diese Blechtafeln 3 im Bereich der Bördel zunächst einen geringfügigen Spalt 6 bilden.

Zur Herstellung einer flächigen Blechtafel ist vorgesehen, daß jede Blechtafel jeweils an ihren Längskanten mit einem Bördel 5 versehen ist und daß die Bördel 5 nun durch die erfindungsgemässe Schweißvorrichtung zusammengeführt, zusammengepresst und nachfolgend in einer bestimmten Höhe abgeschnitten werden, um danach dann verschweisst zu werden.

Die Schweissvorrichtung besteht hierbei aus einer vorderen Führungsrolle 35, die gemäss Figur 2 nutenförmig profiliert ist. Die Führungsrolle 35 weist hierbei in ihrem Mittenabschnitt eine Führungsnut 36 auf, die in ihrer Profilform der Profilform der hochstehenden Bördel angepasst ist. Auf diese Weise wird gewährleistet, daß die Führungsrolle 35 mit geringem Spiel der Führungsnut 36 über dem Bördel 5 läuft und hiermit die gesamte Schweissvorrichtung in Transportrichtung 19 geführt wird.

Es kann vorgesehen sein, daß an der Rückseite der Maschine eine Abstützrolle 23 vorhanden ist.

Durch die Anordnung von zwei einen gegenseitigen Abstand voneinander einnehmenden Rollen 23,35 wird gewährleistet, daß die Maschine sich nicht in senkrechter Ebene zur Ebene der Blechtafeln verkanten kann.

Die hintere Abstützrolle 23 weist ebenfalls eine Führungsnut 24 auf, deren Profil mindestens der Höhe der sich ergebenden Schweißnaht 25 angepasst ist. Hiermit wird sichergestellt, daß die Abstützrolle 23 auf der Blechoberfläche sich abwälzt, während dies gleichfalls bei der Führungsrolle 35 sichergestellt werden muß, um eine ebene, verkantungsfreie Führung der Schweißvorrichtung längs der Bördel 5 zu gewährleisten.

Die axiale Länge der Rollen 23,35 ist nur schematisiert dargestellt. Sie können selbstverständlich auch mehrfach angeordnet sein, um auch eine seitliche Verkippung der Schweißvorrichtung zu vermeiden.

Die Schweißvorrichtung kann hierbei noch seitliche Abstützrollen aufweisen.

Um die hochstehenden Bördel 5 in der geforderten Höhe 45 abzutrennen, ist die Trennvorrichtung nach Figur 1 vorgesehen. Sie besteht aus zwei einander gegenüberliegenden Schneidrollen 38,39, die drehend in Drehrichtung 40 jeweils angetrieben sind und sich entlang der hochstehenden Bördel abwälzen. Hiermit wird also gleichzeitig der Transport der Schweißvorrichtung in Transportrichtung 19 gewährleistet.

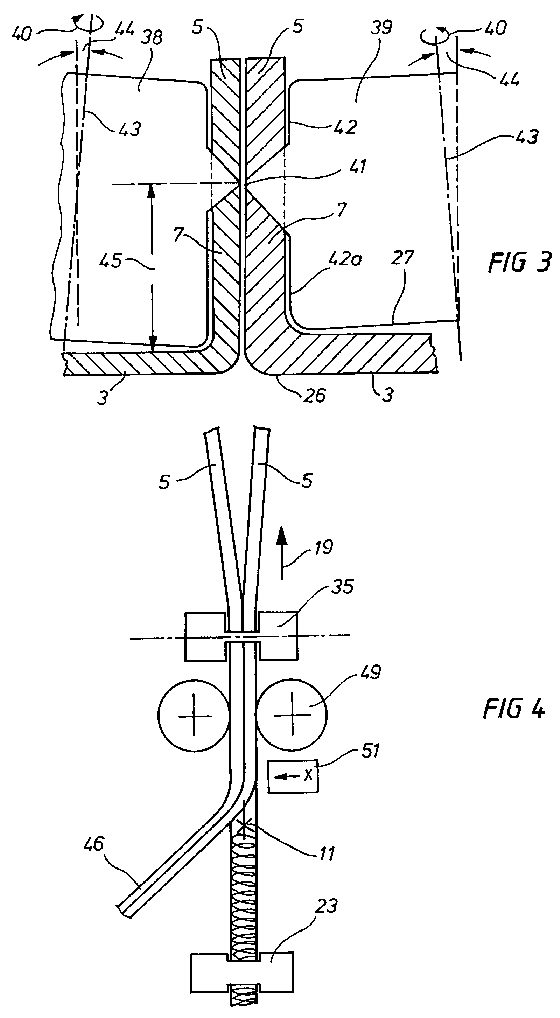

Die Schneidrollen 38,39 weisen eine Profilierung auf, wie sie in Figur 3 dargestellt ist.

Von einer jeweils radial außenliegenden Schneidkante 41 schließen sich Andrückkanten 42 an, welches sich reibschlüssig und unter Vorspannung an der Innenseite der hochstehenden Bördel 5 anlegen und diese Bördel somit unter hoher Kraft zusammenpressen.

Kurz hinter den Schneidrollen 38,39 erfolgt das Verschweißen der abgeschnittenen Bördel, die dann nur noch als Stumpf 7 vorhanden sind.

Dieser Stumpf 7 wird von der nur schematisiert dargestellten Elektrodenanordnung mit dem Elektrodenhalter 11 verschweißt, so daß sich eine kontinuierliche Schweißnaht 25 ergibt.

Die Masse der noch verbleibenden Bördel (Stümpfe 7) geht in die Schweißnaht ein, so daß sich eine flächige, möglichst nicht hochstehende Schweißnaht ergibt.

Demzufolge ist wichtig, daß die Höhe 45 einstellbar ist, um entsprechend der Masse der Stümpfe 7 ein Verlaufen der Schweißnaht 25 zu gewährleisten.

Die Figur 1 zeigt im übrigen noch, daß eine Ablenkvorrichtung 48 vorhanden ist, mit der es möglich ist, die beiden Abfallstreifen 46 in Pfeilrichtung 47 seitlich abzulenken und zu entfernen.

Die Figur 1 zeigt im übrigen noch, daß die beiden Schneidrollen 38,39 in den Pfeilrichtungen 12,13 gegeneinander vorgespannt sind, um einerseits den Schneidvorgang durchführen zu können und andererseits die Transportfunktion und Anpressfunktion zu gewährleisten.

Gemäß Figur 3 ist vorgesehen, daß die Drehachsen 43 der beiden Schneidrollen 38,39 im Winkel 44 geneigt zur Vertikalen ausgebildet ist. Sinn dieser Maßnahme ist, zu gewährleisten, daß die untere Andrückkante 42a der Rollen 38,39 sich nur im Bördelknie 26 anlegt und dort die Stümpfe 7 fest zusammenpresst. Damit wird gewährleistet, daß die untere Fläche 27 der Rollen 38,39 nicht in Kollision kommt mit der horizontalen Fläche der Blechtafeln 3.

Statt der hier dargestellten Profilierung der Schneidkante 41 sind selbstverständlich noch andere Profilierungen möglich.

Figur 4 zeigt ein abgewandeltes Ausführungsbeispiel, wo für die gleichen Teile die gleichen Bezugszeichen wie in Figur 1 gewählt wurden.

In Abweichung zu dem Ausführungsbeispiel nach Figur 1 sind hierbei lediglich zwei einander gegenüberliegende Anpress- und Transportrollen 49,50 dargestellt, welche die Anpress- und Transportfunktion übernehmen, wo hingegen die Schneidfunktion durch ein hinter den Anpress- und Transportrollen liegendes Laser-Schneidgerät 51 gewährleistet wird.

Es versteht sich vonselbst, daß neben den hier gezeigten Anpress- und Tarnsportrollen 49,50 noch weitere an anderer Stelle angeordnete Anpress- und Transportrollen angeordnet sein können.

Ebenso ist es möglich, einem Paar von Rollen 49,50 nur die Anpressfunktion zuzuordnen, während einem anderen Paar von Rollen 49,50 die Transportfunktion zugeordnet wird.

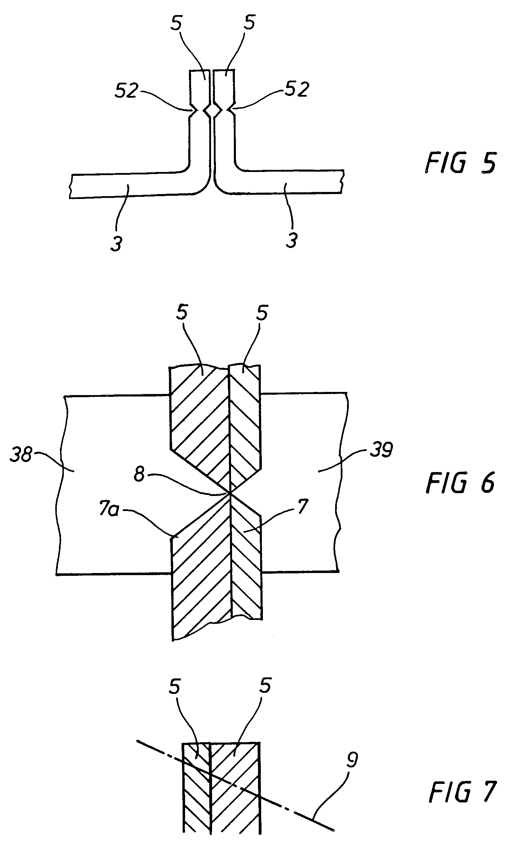

Die Figur 5 zeigt im übrigen noch, daß es möglich ist, die hochstehenden Bördel mit einer querschnittsschwächenden Nut 52 zu versehen.

Hierbei besteht die Möglichkeit, die Nut 52 nur jeweils an den Außenseiten der Bördel anzuordnen oder - in einer anderen Ausführungsform wie in Figur 5 dargestellt - kann es auch vorgesehen sein, die Nut 52 innen- und außenseitig der Bördel 5 anzubringen.

Das Abtrennen der hochstehenden Bördel jenseits der Nut 52 erfolgt dann durch ein Abreissen, ein Trennen oder ein Abschneiden.

Das Wesen der vorliegenden Erfindung liegt also darin, daß man zwei einander widersprechende Forderungen erfindungsgemäss erfüllt. Einerseits wird eine relativ hohe Bördelkante gefordert, um die Bördel möglichst formschlüssig aneinander zu pressen und in diesem Zustand der Schweissung zuzuführen und gleichzeitig wird diese Forderung auch gestellt, um die Schweissvorrichtung optimal längs der Bördelkanten zu führen. Diese Forderung steht jedoch der anderen Forderung entgegen, daß man eine ideale Schweissnaht schaffen will, nämlich eine insich verlaufende Schweissnaht, die möglichst flächig mit der Ebene der Blechtafeln abschließt. Demzufolge muß man insbesondere bei dünnwandigen Blechen eine relativ niedrige Bördelhöhe wählen, die es dann nicht mehr gestattet, die Bördel dicht und formschlüssig aneinander zu pressen und in diesem Zustand der Schweissung zuzuführen und andererseits gestattet diese niedrige Bördelhöhe es nicht mehr, die Schweissvorrichtung optimal zu führen. Nur durch die erfindungsgemäss vorgesehene Trennvorrichtung und durch das Verfahren nach der vorliegenden Erfindung werden also diese beiden einander widersprechenden Forderungen in optimaler Weise erfüllt.

Es wird noch weiterhin als erfindungswesentlich beansprucht, daß nicht nur ein horizontaler Schnitt durch die beiden einander gegenüberliegenden Bördel 5 vorgenommen wird, sondern daß auch ein Schrägschnitt vorgenommen wird.

Die Figur 3 zeigt nämlich, daß auch Bördel 5 unterschiedlicher Materialstärke miteinander verschweisst werden können.

Hierzu ist die Figur 6 gezeichnet, wo erkennbar ist, daß zwei Bördel 5 unterschiedlicher Materialstärke unterschiedlich schräg abgeschnitten werden, wodurch sich ein Absatz 8 ergibt, so daß die Materialmenge des dünneren Querschnitts des verbleibenden Stumpfes 7 praktisch genauso oder wenigstens ähnlich ist, wie die Materialmenge des dickeren Stumpfes 7a.

In gleicher Weise ist es möglich, gemäss Figur 7 einen schrägliegenden Schnitt 9 anzubringen, der die gleiche Zielsetzung hat, nämlich das Material der dickeren Bördelkante zu vermindern, und das Material der dünneren Bördelkante im Vergleich hierzu zu erhöhen, um einen gleichmässigen Einfluß in die Schweißnaht zu gewährleisten.

Es kann jedoch auch situationsbedingt vorgesehen sein, den Schnitt 9 mit anderem Winkel durch die beiden unterschiedlichen Bördel 5 zu legen.

ZEICHNUNGS-LEGENDE

3 Blechtafeln  
5 Bördel  
6 Spalt  
7 Stumpf  
8 Absatz  
9 Schnitt  

11 Elektrodenhalter  
12 Pfeilrichtung  
13 "  

19 Transportrichtung  

23 Abstützrolle  
24 Führungsnut  
25 Schweißnaht  
26 Bördelknie  
27 Fläche  

35 Führungsrolle  
36 Führungsnut  
37 Drehachse  
38 Schneidrolle  
39 Schneidrolle  
40 Drehrichtung  
41 Schneidkante  
42 Andrückkante  
42a "  

43 Drehachse  
44 Winkel  
45 Höhe  
46 Abfallstreifen  
47 Pfeilrichtung  
48 Ablenkvorrichtung  
49 Anpreß- und Transportrolle  
50 "  
51 Laser-Schneidgerät  
52 Nut  

**Patentansprüche**

1. Verfahren zur Herstellung einer zusammengesetzten Blechtafel durch Bildung einer Bördelnaht mit hochstehenden Bördelrändern zwischen nebeneinander gelegten Blechbahnen, die anschließend mit Hilfe eines angetriebenen Schweißwagens, der von den Börderlrändern geführt wird, miteinander verschweißt werden, **dadurch gekennzeichnet,** daß die hochstehenden Bördelränder kurz vor dem Verschweißen gekürzt werden.

**2.** Verfahren nach Anspruch 1, **dadurch gekennzeichnet,** daß die Bördelränder (5,5) Schwächungszonen haben, längs deren sie getrennt werden.

**3.** Schweißungen zur Durchführung des Verfahrens nach Anspruch 1 oder 2 mit einer an seiner Unterseite angebrachten Schweißeinrichtung und mit Führungsrollen für den Schweißwagen an den Bördelrändern, **dadurch gekennzeichnet,** daß an der Unterseite des Schweißwagens in dessen Fahrtrichtung (19) vor der Schweißeinrichtung (11) eine Trenneinrichtung (38,39) für die Börderlränder (5,5) vorgesehen ist.

**4.** Schweißungen nach Anspruch 3, **dadurch gekennzeichnet,** daß die Trenneinrichtung als Schneidrollenpaar (38,39) ausgebildet ist.

**5.** Schweißungen nach Anspruch 4, **dadurch gekennzeichnet,** daß die Schneidrollen (38,39) angetrieben sind.

**6.** Schweißungen nach Anspruch 5, **dadurch gekennzeichnet,** daß die Schneidrollen Andrückflächen oder Andrückkanten aufweisen.

**7.** Schweißungen nach Anspruch 4, 5 oder 6, **dadurch gekennzeichnet,** daß die Schneidrollen im Winkel zur Horizontalen angeordnet sind und untere abgerundete Radien haben.

**8.** Schweißungen nach Anspruch 5, **dadurch gekennzeichnet,** daß der Antrieb der Schneidrollen (38,39) stufenlos einstellbar ist.

**9.** Schweißungen nach einem der Ansprüche 4 bis 8, **dadurch gekennzeichnet,** daß der Abstand der Schneidrollen (38,39) voneinander einstellbar ist.

**10.** Schweißungen nach Anspruch 3, **dadurch gekennzeichnet,** daß die Trenneinrichtung als Rollenschere, als Laser-Schneideinrichtung oder als Trennsäge ausgebildet ist.

**11.** Schweißungen nach einem der Ansprüche 3 bis 10, **dadurch gekennzeichnet,** daß die Höhe der Trenneinrichtung einstellbar ist.

FIG 1

FIG 2

FIG 3

FIG 4

EP 0 490 091 A2

FIG 5

FIG 6

FIG 7